# FASCICULE DE BREVET EUROPEEN

(11) **EP 1 872 988 B1**
(45) Date de publication et mention de la délivrance du brevet: **14.01.2009**
(21) Numéro de dépôt: 07301097.7
(22) Date de dépôt: 11.06.2007
(51) Int. Cl.: B60H 1/34

(54) **Aérateur pour véhicule automobile comprenant deux ensembles d'ailettes de réglage**
Lüfter für Kraftfahrzeug, das zwei Regulierungsflügelanordnungen umfasst
Ventilator for automobile comprising two sets of adjustment blades

(30) Priorité: 27.06.2006 FR 0605797
(43) Date de publication de la demande: 02.01.2008
(73) Titulaire: Key Plastics International, 61130 Bellême (FR)
(72) Inventeur: Avanzini, Philippe, 61130 Bellême (FR)
(74) Mandataire: Kedinger, Jean-Paul

(56) Documents cités:
- EP-A1- 1 422 088
- DE-A1- 2 040 641
- DE-U1- 20 209 004
- DE-U1-4202004 016 82

## Description

La présente invention se rapporte à un aérateur pour véhicule, notamment pour automobile, comprenant un corps fixe, un corps monté rotatif sur le corps fixe, et des moyens de réglage destinés à modifier la direction du flux d'air envoyé dans l'habitacle du véhicule ou à interrompre la circulation du flux d'air vers l'habitacle.

Le document DE 20 2004 016 824 U1 décrit un tel aérateur pour véhicule, notamment pour automobile, comprenant un corps tubulaire fixe comportant une entrée d'air destinée à être reliée à une source d'air conditionné et une sortie d'air destinée à déboucher dans l'habitacle du véhicule, un corps mobile tubulaire monté rotatif sur le corps fixe, du côté de la sortie d'air, des premières ailettes de réglage montées pivotantes sur le corps mobile et destinées à modifier la direction du flux d'air sortant du corps mobile et des moyens de commande pour déplacer un volet d'obturation monté pivotant sur le corps fixe entre une position ouverte dans laquelle il autorise la circulation du flux d'air et une position fermée dans laquelle il arrête ce dernier, lors d'une rotation du corps mobile sur le corps fixe.

Les aérateurs des véhicules automobiles du type précité comportent généralement de nombreuses pièces constitutives, ce qui les rend difficiles et coûteux à fabriquer.

Un but de la présente invention est de remédier à ces inconvénients en proposant un aérateur ayant une structure simple et compacte, facile à manipuler et permettant un réglage précis du flux d'air.

Dans ce but, la présente invention divulgue un aérateur pour véhicule, notamment pour automobile, comprenant un corps tubulaire fixe comportant une entrée d'air destinée à être reliée à une source d'air conditionné et une sortie d'air destinée à déboucher dans l'habitacle du véhicule, un corps tubulaire monté rotatif sur le corps fixe, du côté de la sortie d'air, des premières ailettes de réglage montées pivotantes sur le corps fixe et destinées à modifier la direction du flux d'air sortant du corps fixe, et des moyens de commande pour déplacer lesdites premières ailettes de réglage entre une position ouverte dans laquelle elles définissent la direction de sortie du flux d'air et une position fermée dans laquelle elles arrêtent ce dernier, caractérisé en ce que les moyens de commande comprennent une plaquette sur laquelle les premières ailettes de réglage sont montées pivotantes, parallèlement à leur axe de pivotement respectif sur le corps fixe, et une barrette de guidage fixée sur le corps mobile au niveau de deux emplacements opposés, et enfilée dans un orifice ménagé dans la plaquette et dans deux lumières opposées ménagées dans le corps fixe, la barrette étant déplaçable dans les deux lumières lorsque le corps mobile est entraîné en rotation sur le corps fixe; et ayant une configuration appropriée pour déplacer la plaquette de façon à l'amener à faire pivoter les premières ailettes de réglage entre leurs positions ouverte et fermée lors d'une rotation du corps mobile sur le corps fixe.

Ainsi, l'aérateur conforme à la présente invention présente une structure particulièrement simple, ce qui permet de le fabriquer facilement et avec un faible prix de revient. Le déplacement par rotation du corps cylindrique mobile sur le corps fixe a en outre l'avantage de permettre un réglage précis du débit du flux d'air admis dans le véhicule.

Selon des modes préférés de réalisation de la présente invention :
- chaque première ailette de réglage comporte deux tourillons coaxiaux situés dans le prolongement de l'un de ses côtés longitudinaux et un pivot s'étendant parallèlement à ses tourillons, à proximité de son autre côté longitudinal, les deux tourillons et le pivot de chaque première ailette de réglage étant retenus les premiers dans deux encoches alignées ménagées à proximité immédiate de la sortie d'air du corps fixe, et le dernier dans une encoche ménagée dans l'un des côtés transversaux de la plaquette ;
- les premières ailettes sont pourvues, sur leur face non visible lorsqu'elles sont en position fermée, d'une chape comportant deux joues reliées par leur pivot ;
- le corps fixe comporte des orifices opposés situés à proximité de sa sortie et destinés à livrer passage aux extrémités de l'une au moins des premières ailettes extrêmes lors du pivotement de l'ensemble des premières ailettes entre leurs positions ouverte et fermée ;
- la plaquette est déplaçable sous la commande de la barrette, parallèlement à son plan, dans une fente s'étendant perpendiculairement aux axes de pivotement des premières ailettes, et délimitée par deux éléments de guidage opposés solidaires du corps fixe ;
- les éléments de guidage sont constitués par deux corps en forme de « U » dont les bases sont situées l'une en face de l'autre et délimitent la fente entre elles ;
- le corps fixe est pourvu, du côté de son entrée d'air, d'un volet d'obturation monté pivotant entre une position ouverte dans laquelle il autorise la circulation du flux d'air lorsque les premières ailettes sont en position ouverte et une position fermée dans laquelle il interdit cette circulation lorsque lesdites premières ailettes sont en position fermée ;
- le volet d'obturation comporte latéralement deux disques coaxiaux dont les axes sont parallèles aux axes de pivotement des premières ailettes, ces disques étant montés rotatifs dans deux orifices opposés ménagés dans la paroi du corps fixe et comportant chacun un téton excentré faisant saillie dans une fente ménagée dans le corps mobile, les tétons se déplaçant dans les fentes en faisant pivoter le volet d'obturation entre ses positions ouverte et fermée pendant que les premières ailettes de réglage se déplacent également entre leurs positions ouverte et fermée lors d'une rotation du corps mobile sur le corps fixe ;
- les fentes comportent chacune un premier tronçon s'étendant dans un plan parallèle à l'axe de pivotement des premières ailettes et un second tronçon incliné situé hors de ce plan, les seconds tronçons des fentes étant situés de part et d'autre de ce plan ;
- l'aérateur comprend des secondes ailettes de réglage situées à l'intérieur du corps fixe et montées pivotantes sur celui-ci, sur des axes perpendiculaires aux axes de pivotement des premières ailettes, et des moyens de commande accessibles depuis l'habitacle pour déplacer les secondes ailettes entre une première position extrême dans laquelle elles orientent le flux d'air d'un côté et une seconde position extrême dans laquelle elles orientent le flux d'air du côté opposé ;
- les moyens de commande comprennent une molette montée rotative sur le corps fixe, sur un rebord surplombant localement la sortie d'air de celui-ci, cette molette comportant un tronçon de manipulation faisant saillie en direction de l'habitacle à travers un orifice ménagé dans le rebord ;
- la molette comprend, sur sa partie opposée au tronçon de manipulation, un téton servant de pivot à une pièce de liaison sur laquelle sont articulées les secondes ailettes, la pièce de liaison étant conformée pour que les secondes ailettes pivotent entre leurs positions extrêmes lorsque la molette est entraînée en rotation dans un sens ou dans l'autre ;
- les secondes ailettes comportent chacune deux tourillons coaxiaux situés dans le prolongement de l'un de leurs côtés longitudinaux et s'appuyant contre le fond de gorges longitudinales ménagées dans la paroi du corps fixe, à partir de la sortie de celui-ci ;
- l'un des tourillons des secondes ailettes est plus long que l'autre, les longs tourillons étant situés d'un même côté ;
- la pièce de liaison est pourvue de gorges de retenue tandis que les secondes ailettes sont pourvues chacune d'une protubérance latérale s'étendant parallèlement et à distance de leurs tourillons, les protubérances étant insérées dans les gorges de retenue de façon à permettre le pivotement des secondes ailettes sur le corps fixe ;
- la protubérance latérale des secondes ailettes est située dans le prolongement du côté longitudinal de celles-ci qui ne porte pas les tourillons ;
- l'aérateur comporte en outre une bague de manipulation fixée sur le corps mobile et accessible depuis l'habitacle, cette bague permettant à un utilisateur de faire tourner le corps mobile sur le corps fixe et maintenant en place les ailettes de réglage à l'intérieur de ce dernier ;
- le corps mobile et la bague de manipulation comprennent des organes d'accouplement complémentaires les reliant de manière amovible ; et
- les organes d'accouplement complémentaires sont constitués par des protubérances périphériques réalisées sur l'un du corps mobile et de la bague de manipulation et par des dépressions de forme complémentaire réalisées dans l'autre du corps mobile et de la bague de manipulation.

L'invention va maintenant être décrite plus en détail en référence à un mode de réalisation particulier donné à titre d'illustration uniquement et représenté sur les figures annexées dans lesquelles :
- la figure 1 est une vue schématique en perspective, pratiquement de face, d'un aérateur conforme à la présente invention installé sur un tableau de bord de véhicule automobile ;
- la figure 2 est une vue en perspective éclatée de l'aérateur représenté sur la figure 1 ;
- la figure 3 est une vue de côté du corps fixe de l'aérateur représenté sur la figure 2 ;
- la figure 4 est une vue selon la flèche IV de la figure 3 ;
- la figure 5 est une vue de dessus selon la flèche V de la figure 3 ;
- la figure 6 est une vue en perspective de la barrette de guidage représentée sur la figure 2 ;
- la figure 7 est une vue en perspective de la pièce de liaison représentée sur la figure 2 ;
- la figure 8 est une vue selon la flèche VIII de la figure 7 ;
- la figure 9 est une vue en perspective de la molette rotative représentée sur la figure 2 ;
- la figure 10 est une vue en perspective des premières ailettes de réglage représentées sur la figure 2 ;
- la figure 11 est une vue en perspective de la plaquette de support représentée sur la figure 2 ;
- la figure 12 est une vue de côté du corps mobile de l'aérateur représenté sur la figure 2 ;
- la figure 13 est une vue selon la flèche XIII de la figure 12 ;
- la figure 14 est une vue en coupe selon la ligne XIV-XIV de la figure 1, dans laquelle les premières et secondes ailettes de réglage, ainsi que le volet d'obturation, sont en position complètement ouverte et étendent parallèlement à la direction d'écoulement du flux d'air ;
- la figure 15 est une vue en coupe selon la ligne XV-XV de la figure 14 ;
- la figure 16 est une vue similaire à la figure 14 mais dans laquelle les premières ailettes de réglage et le volet d'obturation sont en position fermée, la position des secondes ailettes de réglage n'ayant pas été modifiée ; et
- la figure 17 est une vue similaire à la figure 14 dans laquelle les premières ailettes de réglage sont inclinées pour orienter le flux d'air vers le haut.

L'aérateur représenté sur les dessins a été conçu pour être installé sur le tableau de bord d'une automobile.

Il va de soi cependant que l'on ne sortirait pas du cadre de la présente invention si cet aérateur était installé sur le panneau intérieur d'une portière ou sur tout autre support situé dans l'habitacle de l'automobile. Il pourrait également être utilisé pour diffuser de l'air dans l'habitacle d'un véhicule de transport de personnes tel qu'un avion ou un wagon de train.

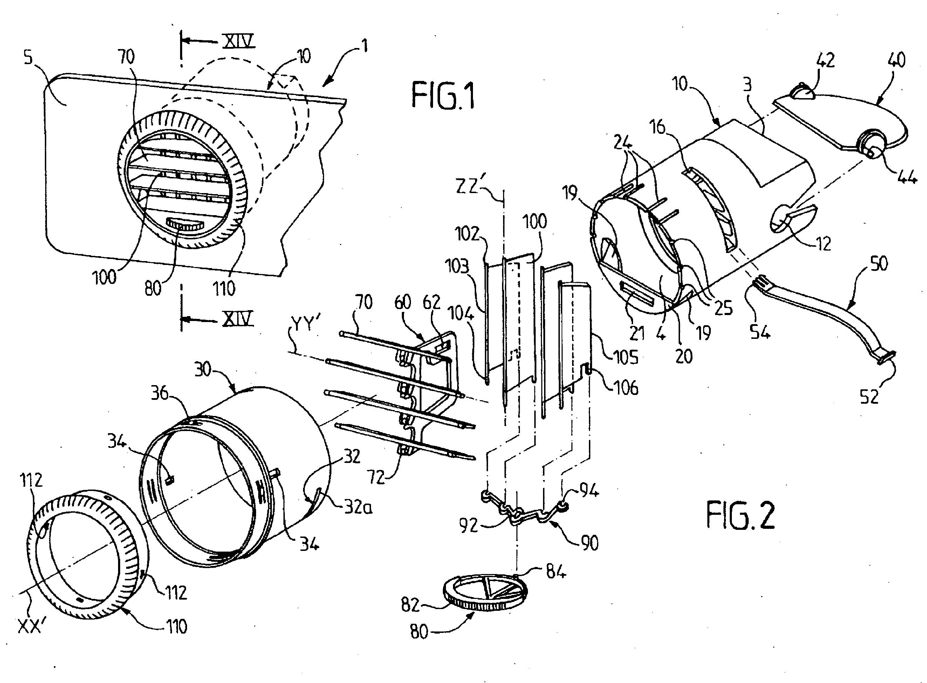

La figure 1 est une vue pratiquement de face d'un aérateur 1 monté de manière connue en soi dans une ouverture ménagée dans une planche de bord 5 d'un véhicule automobile, tandis que la figure 2 représente cet aérateur en perspective éclatée.

L'aérateur 1 comprend globalement un corps tubulaire fixe 10, un corps tubulaire mobile 30 monté pivotant sur le corps fixe 10, sur un axe XX', un volet d'obturation pivotant 40, une barrette de guidage 50, une plaquette de commande 60, quatre premières ailettes de réglage 70 montées chacune pivotante sur un axe YY', une molette rotative 80, une pièce de liaison 90, quatre secondes ailettes de réglage 100 montées chacune pivotante sur un axe ZZ' et une bague de manipulation 110 à l'aide de laquelle un utilisateur peut faire tourner le corps mobile 30 sur le corps fixe 10.

Le corps fixe 10 comporte une entrée d'air 3 destinée à être reliée d'une manière conventionnelle à une installation de climatisation (non représentée) prévue sur le véhicule automobile, et une sortie d'air 4 débouchant dans l'habitacle. L'air circule ainsi à l'intérieur du corps fixe 10, de l'entrée 3 (amont) vers la sortie 4 (aval) le long d'un axe principal d'écoulement confondu avec l'axe de rotation XX' du corps mobile 30, le flux d'air fourni pouvant être orienté ou bloqué par les ailettes de réglage 70 et 100 et par le volet d'obturation 40, comme cela sera décrit plus loin.

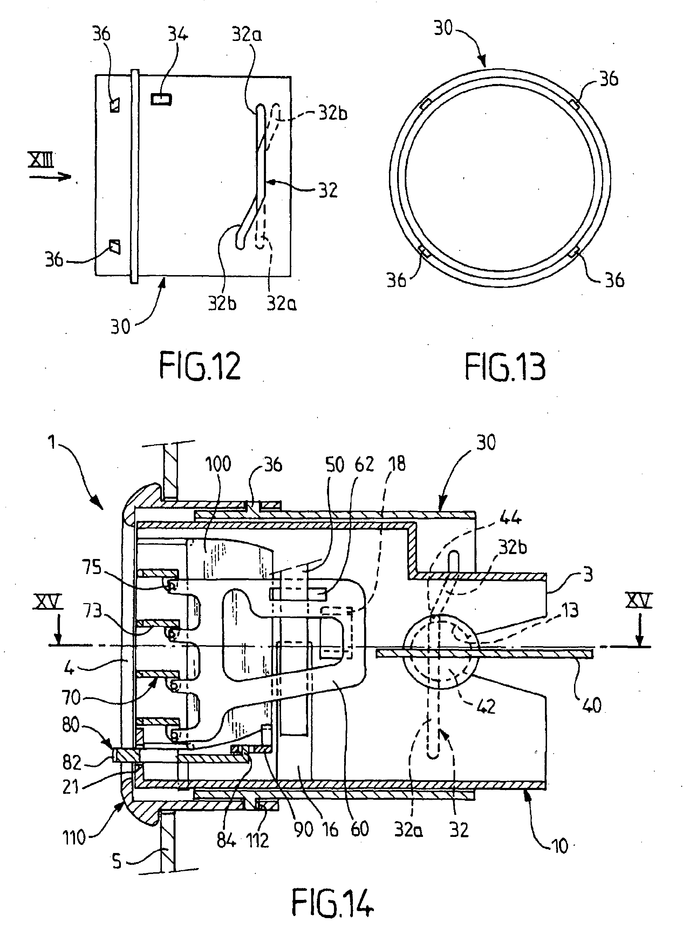

La paroi latérale du corps fixe 10 comprend, à proximité de l'entrée d'air 3, deux logements 12 diamétralement opposés et constitués chacun par un orifice circulaire 13 communiquant avec une fente 15 s'étendant jusqu'à l'extrémité du corps fixe 10 qui délimite l'entrée 3, cette fente s'évasant en direction de ladite extrémité à partir de sa jonction 14 avec l'orifice 13. Les deux orifices 13 sont destinés à recevoir deux disques coaxiaux 42 prévus latéralement sur le volet d'obturation 40, comme illustré également sur les figures 14 à 17.

Chacun des disques latéraux 42 est muni d'un téton excentré 44 faisant saillie dans une fente 32 ménagée dans le corps mobile 30, les tétons 44 étant aptes à se déplacer dans les fentes 32 qui sont en partie diamétralement opposées (figure 12).

Comme cela est représenté plus en détail sur les figures 12, 14 et 16, les fentes 32 comportent chacune un premier tronçon 32a s'étendant dans un plan parallèle à l'axe de pivotement YY' des premières ailettes 70 et perpendiculaire à l'axe de pivotement XX'. Chaque fente 32 comprend également un second tronçon incliné 32b situé hors du plan cité précédemment. Plus précisément, le tronçon incliné 32b de l'une des fentes est dirigé vers l'entrée 3, tandis que le tronçon incliné 32b de l'autre fente est dirigé vers la sortie 4, les tronçons inclinés 32b étant symétriques par rapport au point d'intersection de l'axe XX' avec le plan dans lequel se trouvent les premiers tronçons 32a.

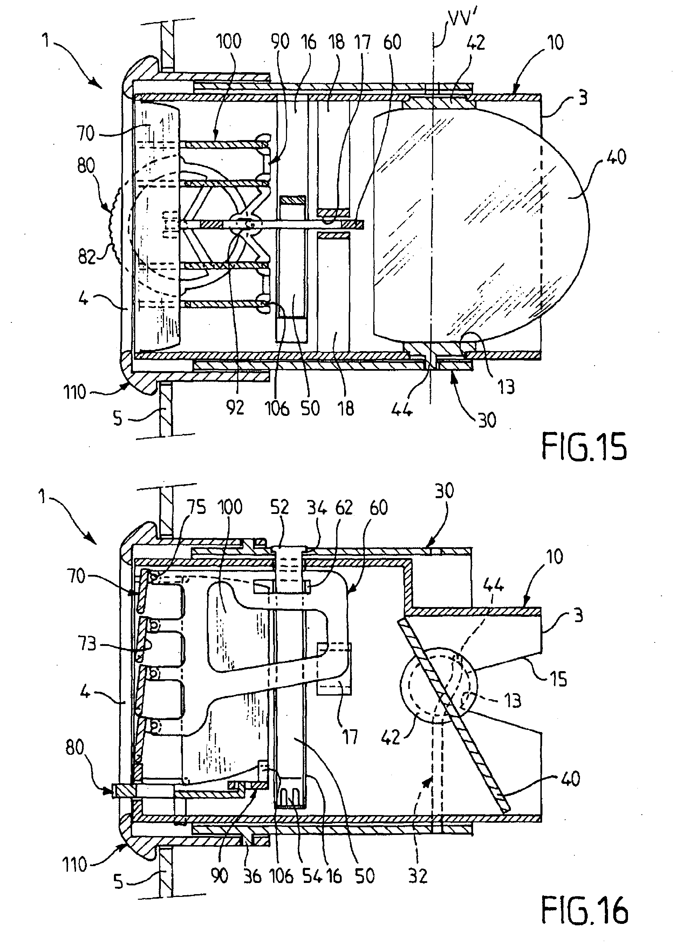

Les tétons excentrés 44 permettent au volet d'obturation 40 de pivoter autour d'un axe VV' parallèle aux axes de pivotement YY' des premières ailettes 70 (figure 15). Plus précisément, le volet 40 est destiné à pivoter, grâce aux tétons 44, entre une position ouverte dans laquelle il autorise la circulation du flux d'air lorsque les premières ailettes 70 sont en position ouverte (figures 14, 15 et 17) et une position fermée dans laquelle il interdit cette circulation lorsque lesdites premières ailettes 70 sont en position fermée (figure 16).

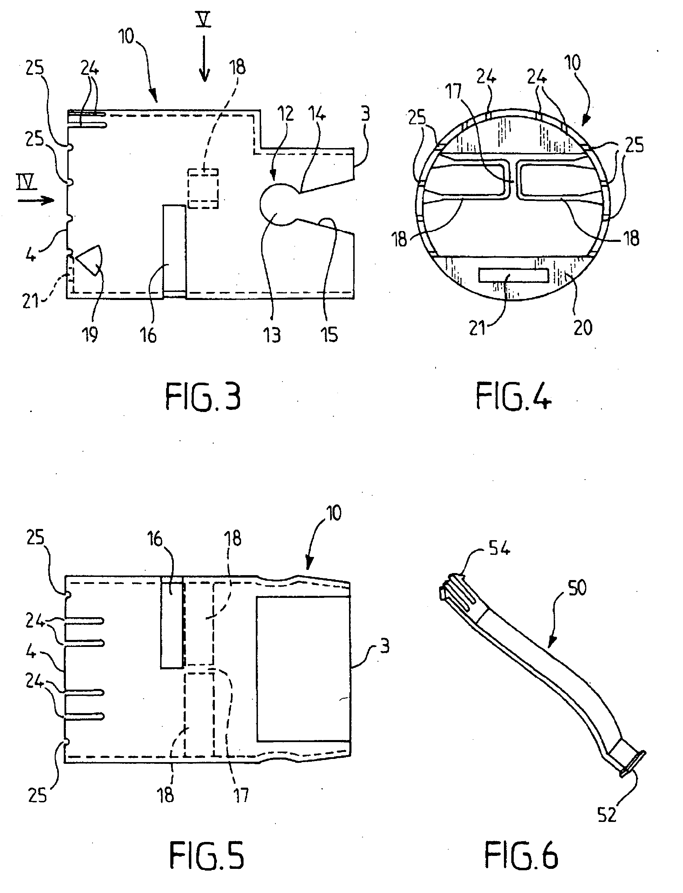

Comme cela est représenté sur les figures 2 et 5, le corps fixe 10 présente en outre, à mi-chemin entre l'entrée 3 et la sortie 4, des lumières diamétralement opposées 16 ménagées dans sa paroi, parallèlement aux axes de pivotement YY' des premières ailettes 70. Ces lumières 16 sont adaptées pour être traversées par la barrette de guidage 50, laquelle présente une forme courbe et est munie à ses extrémités respectives d'une butée 52 et de pattes de fixation adjacentes 54 élastiquement déformables.

Le corps mobile 30 présente quant à lui deux fentes 34 diamétralement opposées, ces fentes étant disposées en regard des lumières 16 lorsque le corps mobile 30 est monté sur le corps fixe 10.

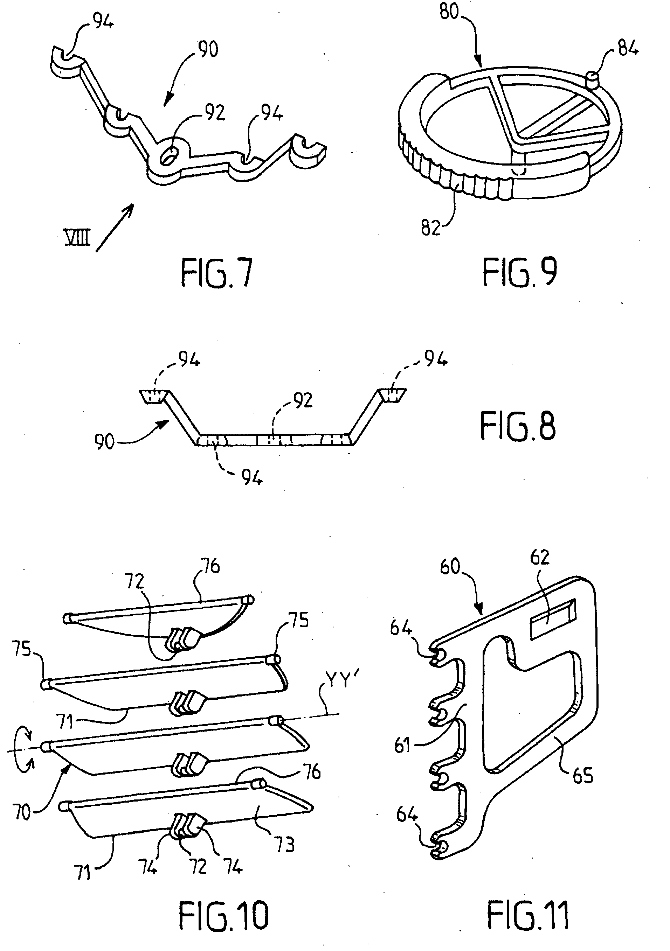

Lorsque les corps fixe et mobile sont assemblés, la barrette 50 est insérée à travers les deux fentes 34 du corps mobile 30 et les deux lumières 16 du corps fixe 10, ainsi qu'à travers une ouverture 62 réalisée dans la plaquette de commande 60 (représentée plus en détail sur la figure 11). Par ailleurs, les pattes élastiquement déformables 54 sont engagées à force dans l'une des fentes 34 du corps mobile 30, tandis que la butée 52 repose sur le pourtour de l'autre fente 34 pour maintenir la barrette de guidage 50 en position.

Comme cela est visible en particulier sur la figure 10, les premières ailettes de réglage 70 sont munies de deux tourillons coaxiaux 75 disposés dans le prolongement de l'un de leurs côtés longitudinaux 76. Les premières ailettes 70 présentent également une face 73 qui n'est pas visible lorsqu'elles sont dans leur position fermée illustrée en particulier sur la figure 16. Sur leur face non visible 73, les premières ailettes sont pourvues, à proximité de leur autre côté longitudinal 71, d'un pivot 72 s'étendant parallèlement aux tourillons 75 tout en s'appuyant sur les joues d'une chape 74.

Les tourillons 75 des ailettes 70 sont retenus dans des encoches 25 réalisées dans le corps fixe 10, à proximité immédiate de la sortie d'air 4, et parfaitement visibles sur les figures 2 et 3.

La plaquette de commande 60 présente, dans son côté transversal aval 61 (figure 11), une série de quatre encoches 64 dans lesquelles sont respectivement insérés les pivots 72 des premières ailettes 70.

Par ailleurs, la plaquette de commande 60 est insérée, au niveau de sa partie amont 65, dans une fente 17 (visible sur les figures 4 et 15) s'étendant perpendiculairement aux axes de pivotement YY' des premières ailettes 70. Cette fente 17 est délimitée par deux éléments de guidage opposés 18 solidaires du corps fixe 10 et constitués par deux corps en U dont les bases sont situées l'une en face de l'autre.

Le corps fixe 10 comporte, à proximité de sa sortie 4, des orifices opposés 19 ménagés dans sa paroi. Ces orifices 19, de forme sensiblement triangulaire, sont destinés à livrer passage aux extrémités de l'une des premières ailettes extrêmes 70, lors du pivotement de l'ensemble des premières ailettes entre leurs positions ouverte et fermée.

Le corps fixe 10 comporte en outre un rebord 20 surplombant la sortie d'air 4 et muni d'un orifice 21 pour recevoir la molette rotative 80. Cette molette rotative 80 comprend un tronçon de manipulation 82 faisant saillie sur le rebord 20 en direction de l'habitacle du véhicule pour pouvoir être manipulée aisément. Comme cela est représenté plus en détail sur la figure 9, la molette 80 comprend en outre, à l'opposé de son tronçon de manipulation 82, un téton 84 servant de pivot à la pièce de liaison 90 sur laquelle sont articulées les secondes ailettes de réglage 100. Plus précisément, le téton 84 vient s'insérer dans un orifice central 92 de forme oblongue ménagé dans la pièce de liaison 90 (figures 2 et 15).

Les secondes ailettes de réglage 100 comportent chacune deux tourillons coaxiaux 102 et 104 situés dans le prolongement de l'un de leurs côtés longitudinaux 103. Ces tourillons 102 et 104 s'appuient contre le fond de gorges longitudinales 24 ménagées dans la paroi périphérique du corps fixe 10, à partir de la sortie 4 de celui-ci, comme représenté sur la figure 2. En particulier, les tourillons 104 des secondes ailettes 100 sont plus longs que les autres tourillons 102, les longs tourillons étant par ailleurs situés d'un même côté.

La pièce de liaison 90 est pourvue de quatre gorges de retenue 94 (figures 2, 7 et 8) symétriques par rapport à l'axe longitudinal de l'orifice oblong 92. Ces gorges 94, qui sont situées à des distances différentes de part et d'autre de l'axe longitudinal de l'orifice 92, sont respectivement adaptées pour recevoir une protubérance latérale 106 prévue sur une seconde ailette 100.

Les protubérances latérales 106 sont situées dans le prolongement des côtés longitudinaux 105 des secondes ailettes qui ne portent pas les tourillons 102 et 104, du côté des tourillons les plus longs 104.

La bague de manipulation 110 est fixée sur le corps mobile 30 à l'aide de quatre protubérances périphériques 36 (figures 12 et 13) réalisées sur le corps fixe 10 et coopérant avec des dépressions 112 de forme complémentaire ménagées également de manière périphérique dans la bague 110 (figure 2), afin d'assurer une liaison de type clip (figures 14 et 16). Une fois la bague de manipulation 110 fixée sur le corps mobile 30, elle fait légèrement saillie sur la paroi 5 de la planche de bord (figure 1) pour pouvoir être facilement entraînée en rotation par un utilisateur.

Le fonctionnement de l'aérateur 1 conforme à la présente invention est le suivant.

Le pivotement synchronisé des premières ailettes de réglage 70 et du volet d'obturation 40, entre leurs positions extrêmes d'ouverture et de fermeture respectives, est commandé par la rotation du corps mobile 30 sur le corps fixe 10, sur l'axe XX', par un mouvement manuel de la bague de manipulation 110 dans un sens ou dans l'autre.

Plus précisément, lorsque l'utilisateur fait tourner la bague de manipulation 110, celle-ci fait pivoter le corps mobile 30 dont elle est solidaire par l'intermédiaire de la liaison de type clip décrite précédemment. Cela a pour effet de faire tourner la barrette 50, qui est reliée au corps mobile 30 par l'intermédiaire de la butée 52 et des pattes élastiquement déformables 54, à l'intérieur des deux fentes opposées 16 du corps fixe 10. Pendant sa rotation, la barrette 50, grâce à sa forme courbe, provoque un coulissement vertical de la plaquette 60 au sein de la fente 17 délimitée par les deux éléments de guidage 18, le déplacement rectiligne vertical de la plaquette 60 est tel qu'il fait pivoter les premières ailettes 70 autour des axes YY', grâce aux pivots 72 et aux encoches 64.

Pendant que la barrette 50 pivote dans les fentes 16, les tétons 44 du volet d'obturation 40 se déplacent le long des fentes 32 et font pivoter ce dernier sur l'axe VV'.

Ainsi, dans la première position extrême illustrée sur les figures 14 et 15, les premières ailettes 70 et le volet d'obturation 40 sont entièrement ouverts, de sorte que l'air peut circuler à l'intérieur de l'aérateur 1, de l'entrée 3 vers la sortie 4, dans la direction d'écoulement XX', puis sortir dans l'habitacle du véhicule.

Dans la seconde position extrême illustrée sur la figure 16, les premières ailettes 70 et le volet d'obturation 40 sont totalement fermés, de sorte que l'air est bloqué à la fois par le volet d'obturation 40 et par les premières ailettes 70. Aucun flux d'air n'entre donc dans l'habitacle grâce à cette double étanchéité.

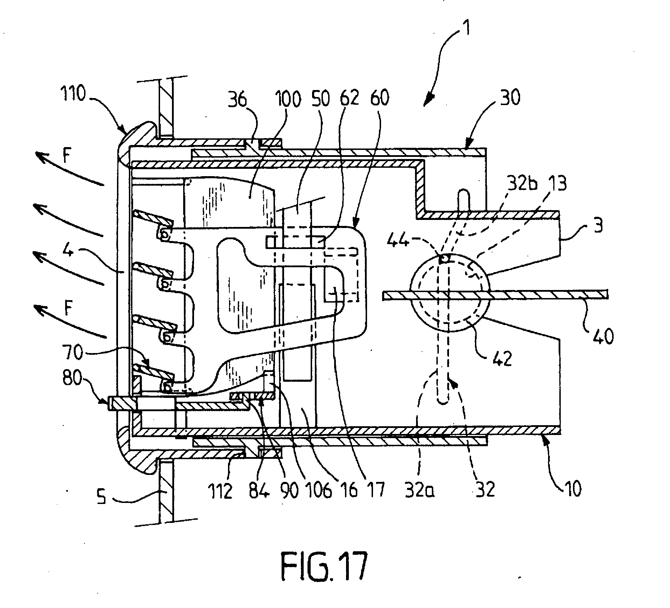

Dans une position intermédiaire illustrée sur la figure 17, les premières ailettes 70 sont légèrement inclinées vers le haut et le volet d'obturation 40 est ouvert, de sorte que l'air peut circuler au travers de l'aérateur 1 et sortir en direction de l'habitacle du véhicule selon les flèches F.

L'utilisateur peut également choisir d'orienter vers la droite ou vers la gauche le flux d'air ainsi envoyé. Pour cela, il utilise la molette de manipulation 80 faisant saillie sur l'aérateur 1, en dessous des premières ailettes 70 (figure 1).

Lorsque l'utilisateur agit sur le tronçon de manipulation 82 de la molette 80 de façon à faire tourner cette dernière vers la droite ou vers la gauche, les secondes ailettes de réglage 100 pivotent sur leurs tourillons 102 et 104 par l'intermédiaire de la pièce de liaison 90 sur laquelle les protubérances 106 sont articulées. La figure 15 illustre une position dans laquelle les secondes ailettes 100 envoient un flux d'air parallèle à l'axe XX'. Cependant, ce flux d'air peut être orienté à droite ou à gauche de cette position centrale par une rotation de la molette 80 dans le sens approprié.

Il est important de noter que les secondes ailettes 100, qui sont portées par le corps fixe, restent toujours alignées verticalement, quelle que soit la position de la bague de manipulation 110.

La combinaison des mouvements de rotation des premières ailettes 70, des secondes ailettes 100 et du volet d'obturation 40 permet ainsi à l'utilisateur de gérer le flux d'air de manière optimisée, que ce soit au niveau de son débit (réglage à l'aide des premières ailettes 70 et du volet 40) ou de son orientation (réglage à l'aide des secondes ailettes 100).

L'aérateur 1 de la présente invention est particulièrement compact, fiable, et facile à utiliser.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, le nombre des premières et secondes ailettes de réglage pourrait être différent de celui représenté.

## Revendications

1. Aérateur (1) pour véhicule, notamment pour automobile, comprenant un corps tubulaire fixe (10) comportant une entrée d'air (3) destinée à être reliée à une source d'air conditionné et une sortie d'air (4) destinée à déboucher dans l'habitacle du véhicule, un corps mobile tubulaire (30) monté rotatif sur le corps fixe, du côté de la sortie d'air (4), des premières ailettes de réglage (70) montées pivotantes sur le corps fixe (10) et destinées à modifier la direction du flux d'air sortant du corps fixe (10), et des moyens de commande (50, 60) pour déplacer lesdites premières ailettes de réglage (70) entre une position ouverte dans laquelle elles définissent la direction de sortie du flux d'air (XX') et une position fermée dans laquelle elles arrêtent ce dernier **caractérisé en ce que** les moyens de commande (50, 60) comprennent une plaquette (60) sur laquelle les premières ailettes de réglage (70) sont montées pivotantes, parallèlement à leur axe de pivotement respectif (YY') sur le corps fixe (10), et une barrette de guidage (50) fixée sur le corps mobile (30) au niveau de deux emplacements opposés (34), et enfilée dans un orifice (62) ménagé dans la plaquette (60) et dans deux lumières opposées (16) ménagées dans le corps fixe (10), la barrette (50) étant déplaçable dans les deux lumières (16) lorsque le corps mobile (30) est entraîné en rotation sur le corps fixe (10), et ayant une configuration appropriée pour déplacer la plaquette (60) de façon à l'amener à faire pivoter les premières ailettes de réglage (70) entre leurs positions ouverte et fermée lors d'une rotation du corps mobile (30) sur le corps fixe (10),

2. Aérateur selon la revendication 1, **caractérisé en ce que** chaque première ailette de réglage (70) comporte deux tourillons (75) coaxiaux situés dans le prolongement de l'un de ses côtés longitudinaux et un pivot (72) s'étendant parallèlement à ses tourillons (75), à proximité de son autre côté longitudinal, les deux tourillons (75) et le pivot (72) de chaque première ailette de réglage (70) étant retenus les premiers dans deux encoches alignées (25) ménagées à proximité immédiate de la sortie d'air (4) du corps fixe (10), et le dernier dans une encoche (64) ménagée dans l'un des côtés transversaux de la plaquette (60).

3. Aérateur selon la revendication 2, **caractérisé en ce que** les premières ailettes (70) sont pourvues, sur leur face non visible (73) lorsqu'elles sont en, position fermée, d'une chape (74) comportant deux joues reliées par leur pivot (72).

4. Aérateur selon l'une quelconque des revendications précédentes, **caractérisé en ce que** le corps fixe (10) comporte des orifices opposés (19) situés à proximité de sa sortie (4) et destinés à livrer passage aux extrémités de l'une au moins des premières ailettes extrêmes (70) lors du pivotement de l'ensemble des premières ailettes entre leurs positions ouverte et fermée.

5. Aérateur selon l'une quelconque des revendications précédentes, **caractérisé en ce que** la plaquette (60) est déplaçable sous la commande de la barrette (50), parallèlement à son plan, dans une fente (17) s'étendant perpendiculairement aux axes de pivotement (YY') des premières ailettes (70), et délimitée par deux éléments de guidage opposés (18) solidaires du corps fixe (10).

6. Aérateur selon la revendication 5, **caractérisée en ce que** les éléments de guidage (18) sont constitués par deux corps en forme de « U » dont les bases sont situées l'une en face de l'autre et délimitent la fente (17) entre elles.

7. Aérateur selon l'une quelconque des revendications précédentes, **caractérisé en ce que** le corps fixe (10) est pourvu, du côté de son entrée, d'un volet d'obturation (40) monté pivotant entre une position ouverte dans laquelle il autorise la circulation du flux d'air lorsque les premières ailettes (70) sont en position ouverte et une position fermée dans laquelle il interdit cette circulation lorsque lesdites premières ailettes (70) sont en position fermée.

8. Aérateur selon la revendication 7, **caractérisé en ce que** le volet d'obturation (40) comporte latéralement deux disques coaxiaux (42) dont les axes (VV') sont parallèles aux axes (YY') de pivotement des premières ailettes (70), ces disques (42) étant montés rotatifs dans deux orifices opposés (12) ménagés dans la paroi du corps fixe (10) et comportant chacun un téton excentré (44) faisant saillie dans une fente (32) ménagée dans le corps mobile (30), les tétons (44) se déplaçant dans les fentes (32) en faisant pivoter le volet d'obturation (40) entre ses positions ouverte et fermée pendant que les premières ailettes (70) se déplacent également entre leurs positions ouverte et fermée lors d'une rotation du corps mobile (30) sur le corps fixe (10).

9. Aérateur selon la revendication 8, **caractérisé en ce que** les fentes (32) comportent chacune un premier tronçon (32a) s'étendant dans un plan parallèle à l'axe de pivotement (YY') des premières ailettes de guidage (70) et un second tronçon incliné (32b) situé hors de ce plan, les seconds tronçons (32b) des fentes (32) étant situés de part et d'autre de ce plan.

10. Aérateur selon l'une quelconque des revendications précédentes, **caractérisé en ce qu'**il comprend des secondes ailettes de réglage (100) situées à l'intérieur du corps fixe (10) et montées pivotantes sur celui-ci, sur des axes (ZZ') perpendiculaires aux axes de pivotement (YY') des premières ailettes (70), et des moyens de commande (80, 90) accessibles depuis l'habitacle pour déplacer les secondes ailettes de réglage (100) entre une première position extrême dans laquelle elles orientent le flux d'air d'un côté et une seconde position extrême dans laquelle elles orientent le flux d'air du côté opposé.

11. Aérateur selon la revendication 10, **caractérisé en ce que** les moyens de commande (80, 90) comprennent une molette (80) montée rotative sur le corps fixe (10), sur un rebord (20) surplombant localement la sortie (4) de celui-ci, cette molette (80) comportant un tronçon de manipulation (82) faisant saillie en direction de l'habitacle à travers un orifice (21) ménagé dans le rebord (20).

12. Aérateur selon la revendication 11, **caractérisé en ce que** la molette (80) comprend, sur sa partie opposée au tronçon de manipulation (82), un téton (84) servant de pivot à une pièce de liaison (90) sur laquelle sont articulées les secondes ailettes (100), la pièce de liaison (90) étant conformée pour que les secondes ailettes (100) pivotent entre leurs positions extrêmes lorsque la molette (80) est entraînée en rotation dans un sens ou dans l'autre.

13. Aérateur selon l'une quelconque des revendications 10 à 12, **caractérisé en ce que** les secondes ailettes (100) comportent chacune deux tourillons coaxiaux (102, 104) situés dans le prolongement de l'un de leurs côtés longitudinaux (103) et s'appuyant contre le fond de gorges longitudinales (24) ménagées dans la paroi du corps fixe (10), à partir de la sortie (4) de celui-ci.

14. Aérateur selon les revendications 12 et 13, **caractérisé en ce que** l'un des tourillons (104) des secondes ailettes (100) est plus long que l'autre (102), les longs tourillons (104) étant situés d'un même côté.

15. Aérateur selon l'une quelconque des revendications 11 à 14, **caractérisé en ce que** la pièce de liaison (90) est pourvue de gorges de retenue (94) tandis que les secondes ailettes (100) sont pourvues chacune d'une protubérance latérale (106) s'étendant parallèlement et à distance de leurs tourillons (102, 104), les protubérances (106) étant insérées dans les gorges de retenue (94) de façon à permettre le pivotement des secondes ailettes sur le corps fixe (10).

16. Aérateur selon les revendications 15 et 13 ou 14, **caractérisé en ce que** la protubérance latérale (106) des secondes ailettes (100) est située dans le prolongement du côté longitudinal de celles-ci qui ne porte pas les tourillons (102, 104).

17. Aérateur selon l'une quelconque des revendications précédentes, **caractérisé en ce qu'**il comporte en outre une bague de manipulation (110) fixée sur le corps mobile (30) et accessible depuis l'habitacle cette bague permettant à un utilisateur de faire tourner le corps mobile sur le corps fixe (10) et maintenant en place les ailettes de réglage (70, 100) à l'intérieur de ce dernier.

18. Aérateur selon la revendication 17, **caractérisé en ce que** le corps mobile (30) et la bague de manipulation (110) comprennent des organes d'accouplement complémentaires les reliant de manière amovible.

19. Aérateur selon la revendication 18, **caractérisé en ce que** les organes d'accouplement complémentaires sont constitués par des protubérances périphériques (36) réalisées sur l'un du corps mobile (30) et de la bague de manipulation (110) et par des dépressions de forme complémentaire réalisées dans l'autre du corps mobile et de la bague de manipulation.

## Claims

1. A ventilator (1) for a vehicle, especially for a motor car, comprising a stationary tubular body (10) with an air inlet (3) to be connected to a source of conditioned air and an air outlet (4) to open into the passenger compartment of the vehicle, a mobile tubular body (30) rotatably mounted on the stationary body, on the side of the air outlet (4), first adjustment blades (70) pivotally mounted on the stationary body (10) and provided for changing the direction of the air flowing out of the stationary body (10), and control means (50, 60) for moving said first adjustment blades (70) between an open position in which they define the outlet direction of the air flow (XX') and a closed position in which they stop said air flow, **characterized in that** the control means (50, 60) comprise a small plate (60) on which the first adjustment blades (70) are pivotally mounted, parallel to their respective pivot axis (YY') on the stationary body (10), and a guide strip (50) attached to the mobile body (30) at two opposed locations (34) and inserted into a hole (62) provided in the plate (60) and into two opposed apertures (16) provided in the stationary body (10), the strip (50) being movable in the two apertures (16) when the mobile body (30) is rotated on the stationary body (10), and having a configuration suitable for moving the plate (60) so that said plate causes the first adjustment blades (70) to pivot between their open and closed positions upon rotation of the mobile body (30) on the stationary body (10).

2. The ventilator according to claim 1, **characterized in that** each first adjustment blade (70) comprises two coaxial pivot pins (75) located in prolongation of one of its two longitudinal sides and a pivot (72) extending parallel to its pivot pins (75), in the vicinity of its other longitudinal side, the two pivot pins (75) and the pivot (72) of each first adjustment blade (70) being retained, for the former, in two aligned notches (25) provided in the immediate vicinity of the air outlet (4) of the stationary body (10), and, for the latter, in one notch (64) provided in one of the transverse sides of the plate (60).

3. The ventilator according to claim 2, **characterized in that** the first blades (70) are provided, on the face (73) thereof which is not visible when in the closed position, with a yoke (74) comprising two cheeks connected by the blade pivot (72).

4. The ventilator according to any of the preceding claims, **characterized in that** the stationary body (10) comprises opposed holes (19) located in the vicinity of its outlet (4) and provided for allowing the ends of at least one of the first extreme blades (70) to pass upon pivoting of all first blades between their open and closed positions.

5. The ventilator according to any of the preceding claims, **characterized in that** the plate (60) is movable under control of the strip (50), parallel to its plane, within a slot (17) extending perpendicular to the pivot axes (YY') of the first blades (70), and defined by two opposed guide members (18) integral with the stationary body (10).

6. The ventilator according to claim 5, **characterized in that** the guide members (18) consist of two "U"-shaped bodies with the bases thereof facing each other and defining the slot (17) therebetween.

7. The ventilator according to any of the preceding claims, **characterized in that** the stationary body (10) is provided, on the inlet side thereof, with a flap shutter (40) pivotally mounted between an open position in which it allows the air flow to circulate when the first blades (70) are in the open position and a closed position in which it prevents said circulation when said first blades (70) are in the closed position.

8. The ventilator according to claim 7, **characterized in that** the flap shutter (40) comprises laterally two coaxial disks (42) having their axes (VV') parallel to the pivot axes (YY') of the first blades (70), said disks (42) being rotatably mounted in two opposed holes (12) provided in the wall of the stationary body (10) and each comprising an off-centred stub (44) projecting into a slot (32) provided in the mobile body (30), the stubs (44) moving in the slots (32) in causing the flap shutter (40) to pivot between its open and closed positions, while the first blades (70) are also moving between their open and closed positions upon rotation of the mobile body (3) on the stationary body (10).

9. The ventilator according to claim 8, **characterized in that** the slots (32) each comprise a first section (32a) extending in a plane which is parallel to the pivot axis (YY') of the first adjustment blades (70) and a second inclined section (32b) located out of said plane, the second sections (32b) of the slots (32) being located on both sides of said plane.

10. The ventilator according to any of the preceding claims, **characterized in that** it comprises second adjustment blades (100) located within the stationary body (10) and pivotally mounted thereon, about axes (ZZ') perpendicular to the pivot axes (YY') of the first blades (70), and control means (80, 90) accessible from the passenger compartment for moving the second adjustment blades (100) between a first extreme position in which they direct the air flow to one side and a second extreme position in which they direct the air flow to the opposite side.

11. The ventilator according to claim 10, **characterized in that** the control means (80, 90) comprise a wheel (80) rotatably mounted on the stationary body (10), on a flange (20) that overlies locally the outlet (4) thereof, said wheel (80) having a handling portion (82) that projects towards the passenger compartment through a hole (21) provided in the flange (20).

12. The ventilator according to claim 11, **characterized in that** the wheel (80) comprises, on its portion opposite the handling portion (82), a stub (84) acting as a pivot for a connecting part (90) on which the second blades (100) are pivoted, the connecting part (90) being so configured that the second blades (100) pivot between their extreme positions when the wheel (80) is rotated in one direction or the other.

13. The ventilator according to any of claims 10 to 12, **characterized in that** the second blades (100) each comprise two coaxial pivot pins (102, 104) located in prolongation of one of their longitudinal sides (103) and seating on the bottom of longitudinal grooves (24) provided in the wall of the stationary body (10), from the outlet (4) thereof.

14. The ventilator according to claims 12 and 13, **characterized in that** one pivot pin (104) of the second blades (100) is longer than the other (102), the longer pivot pins (104) being located on a same side.

15. The ventilator according to any of claims 11 to 14, **characterized in that** the connecting part (90) is provided with retaining grooves (94), while the second blades (100) are each provided with a lateral protrusion (106) extending parallel to and away from their pivot pins (102, 104), said protrusions (106) being inserted into the retaining grooves (94) so that the second blades can pivot on the stationary body (10).

16. The ventilator according to claims 15 and 13 or 14, **characterized in that** the lateral protrusion (106) of the second blades (100) is located in prolongation of the longitudinal side thereof that does not carry the pivot pins (102, 104).

17. The ventilator according to any of the preceding claims, **characterized in that** it further comprises a handling ring (110) attached to the mobile body (30) and accessible from the passenger compartment, said ring allowing a user to turn the mobile body on the stationary body (10) and maintaining the adjustment blades (70, 100) in position within the latter.

18. The ventilator according to claim 17, **characterized in that** the mobile body (30) and the handling ring (110) comprise complementary coupling members interconnecting them detachably.

19. The ventilator according to claim 18, **characterized in that** the complementary coupling members consist of peripheral protrusions (36) formed on one of the mobile body (30) and handling ring (110) and of depressions of complementary shape formed in the other of the mobile body and handling ring.

## Patentansprüche

1. Lüfter (1) für Fahrzeuge, insbesondere für Kraftfahrzeuge, bestehend aus einem ortsfesten rohrförmigen Körper (10), der einen Lufteinlass (3) aufweist, welcher mit einer Quelle aufbereiteter Luft verbunden werden soll, und einen Luftauslass (4), der in den Fahrzeuginnenraum münden soll, einem am ortsfesten Körper luftauslassseitig (4) drehbar gelagerten beweglichen rohrförmigen Körper (30), am ortsfesten Körper (10) schwenkbar gelagerten ersten Regelflügeln (70) zur Änderung der Flussrichtung der aus dem ortsfesten Körper (10) austretenden Luft, und Steuermitteln (50, 60) zur Verlagerung der ersten Regelflügel (70) zwischen einer Öffnungsstellung, in der sie die Auslassrichtung der Luftströmung (XX') bestimmen, und einer Schließstellung, in der sie letztere sperren,
**dadurch gekennzeichnet, dass** die Steuermittel (50, 60) ein Plättchen (60) umfassen, auf welchem die ersten Regelflügel (70) parallel zu ihren jeweiligen Schwenkachsen (YY') am ortsfesten Körper (10) schwenkbar gelagert sind, und eine am beweglichen Körper (30) an zwei entgegengesetzten Stellen (34) befestigten Führungsleiste (50), die in eine Bohrung (62) im Plättchen (60) sowie in zwei entgegengesetzte Öffnungen (16) im ortsfesten Körper (10) eingebracht wird, wobei die Führungsleiste (50) dann in den beiden Öffnungen (16) beweglich ist, wenn der bewegliche Körper (30) am ortsfesten Körper (10) gedreht wird, und derart ausgebildet ist, dass sie das Plättchen (60) so bewegt, dass letzteres die ersten Regelflügel (70) zwischen ihrer Öffnungs- und Schließstellung schwenkt, wenn der bewegliche Körper (30) am ortsfesten Körper (10) gedreht wird.

2. Lüfter nach Anspruch 1, **dadurch gekennzeichnet, dass** jeder erste Regelflügel (70) zwei im Anschluss an die eine Längsseite koaxial angeordnete Drehzapfen (75) aufweist sowie ein parallel zu den Drehzapfen (75) in der Nähe seiner anderen Längsseite angeordnetes Lagerzapfen (72), wobei beide Drehzapfen (75) und der Lagerzapfen (72) jedes ersten Regelflügels (70) in zwei in unmittelbarer Nähe des Luftauslasses (4) des ortsfesten Körpers (10) vorgesehenen ausgerichteten Kerben (25) bzw. in einer in der einen Querseite des Plättchens (60) vorgesehenen Kerbe (64) gehalten sind.

3. Lüfter nach Anspruch 2, **dadurch gekennzeichnet, dass** die ersten Flügel (70) an ihrer in Schließstellung nicht sichtbaren Seite (73) mit einer Kappe (74) mit zwei Wangen versehen sind, die durch den Lagerzapfen (72) verbunden sind.

4. Lüfter nach einem der vorangehenden Ansprüche, **dadurch gekennzeichnet, dass** der ortsfeste Körper (10) in der Nähe seines Auslasses (4) liegende entgegengesetzte Bohrungen (19) aufweist, zum Durchführen der Enden mindestens eines der äußersten ersten Flügel (70) beim Schwenken der gesamten ersten Flügel zwischen ihrer Öffnungs- und Schließstellung.

5. Lüfter nach einem der vorangehenden Ansprüche, **dadurch gekennzeichnet, dass** bei der Steuerung der Leiste (50) das Plättchen (60) parallel zu seiner Ebene in einem Schlitz (17) beweglich ist, der senkrecht zu den Schwenkachsen (YY') der ersten Flügel (70) angeordnet ist und der von zwei mit dem ortsfesten Körper (10) einstückig verbundenen entgegengesetzten Führungselementen (18) begrenzt wird.

6. Lüfter nach Anspruch 5, **dadurch gekennzeichnet, dass** die Führungselemente (18) zwei U-förmige Körper sind, deren Basen gegenüberliegen und zwischen sich den Schlitz (17) begrenzen.

7. Lüfter nach einem der vorangehenden Ansprüche, **dadurch gekennzeichnet, dass** der ortsfeste Körper (10) einlassseitig mit einer Verschlussklappe (40) versehen ist, die zwischen einer Öffnungsstellung, in der sie bei geöffneten ersten Flügeln (70) den Durchfluss der Luftströmung erlaubt, und einer Schließstellung, in der sie bei geschlossenen ersten Flügeln (70) diesen Durchfluss sperrt, schwenkbar gelagert ist.

8. Lüfter nach Anspruch 7, **dadurch gekennzeichnet, dass** die Verschlussklappe (40) seitlich zwei koaxial angeordnete Scheiben (42) aufweist, deren Achsen (VV') parallel zu den Schwenkachsen (YY') der ersten Flügel (70) sind, wobei diese Scheiben (42) in zwei entgegengesetzten in der Wandung des ortsfesten Körpers (10) vorgesehenen Bohrungen (12) drehbar gelagert sind und einen außermittig angeordneten Zapfen (44) aufweisen, der in einen im beweglichen Körper (30) vorgesehenen Schlitz (32) hineinragt, und wobei die Zapfen (44) sich in den Schlitzen (32) bewegen und dabei die Verschlusskappe (40) zwischen ihrer Öffnungs- und Schließstellung schwenken, während die ersten Flügel (70) sich ebenfalls beim Drehen des beweglichen Körpers (30) am ortsfesten Körper (10) zwischen ihrer Öffnungs- und Schließstellung bewegen.

9. Lüfter nach Anspruch 8, **dadurch gekennzeichnet, dass** jeder Schlitz (32) einen ersten Abschnitt (32a) aufweist, der sich in einer zur Schwenkachse (YY') der ersten Führungsflügel (70) parallelen Ebene erstreckt, und einen zweiten, schräg verlaufenden Abschnitt (32b), der außerhalb dieser Ebene liegt, wobei die zweiten Abschnitte (32b) der Schlitze (32) beiderseits dieser Ebene liegen.

10. Lüfter nach einem der vorangehenden Ansprüche, **dadurch gekennzeichnet, dass** er zweite Regelflügel (100) aufweist, die sich innerhalb des ortsfesten Körpers (10) befinden und an diesem auf Achsen (ZZ') schwenkbar gelagert sind, die senkrecht zu den Schwenkachsen (YY') der ersten Flügel (70) stehen, und vom Fahrzeuginnenraum aus zugängliche Steuermittel (80, 90) zur Verlagerung der zweiten Regelflügel (100) zwischen einer ersten Endstellung, in der sie die Luftströmung nach einer Seite richten, und einer zweiten Endstellung, in der sie die Luftströmung zur entgegengesetzten Seite richten.

11. Lüfter nach Anspruch 10, **dadurch gekennzeichnet, dass** die Steuermittel (80, 90) eine Rändelrolle (80) aufweisen, die am ortsfesten Körper (10) an einer stellenweise in dessen Auslass (4) vorstehenden Leiste (20) drehbar gelagert ist, wobei die Rändelrolle (80) einen Bedienungsabschnitt (82) aufweist, der durch eine in der Leiste (20) vorgesehene Aussparung (21) hindurch in Richtung des Fahrzeuginnenraumes vorsteht.

12. Lüfter nach Anspruch 11, **dadurch gekennzeichnet, dass** die Rändelrolle (80) an ihrem dem Bedienungsabschnitt (82) entgegengesetzten Teil einen Zapfen (84) aufweist, der als Schwenklager für ein Verbindungsstück (90) dient, an dem die zweiten Flügel (100) angelenkt sind, wobei das Verbindungsstück (90) so ausgebildet ist, dass die zweiten Flügel (100) zwischen ihren Endstellungen schwenken, wenn die Rändelrolle (80) in eine Richtung oder in die andere Richtung gedreht wird.

13. Lüfter nach einem der Ansprüche 10 bis 12, **dadurch gekennzeichnet, dass** die zweiten Flügel (100) je zwei koaxiale Zapfen (102, 104) aufweisen, die im Anschluss an eine ihrer Längsseiten (103) vorgesehen sind und sich an den Boden von Längsrillen (24) abstützen, die in der Wandung des ortsfesten Körpers (10) ausgehend von dessen Auslass (4) vorgesehen sind.

14. Lüfter nach Anspruch 12 und 13, **dadurch gekennzeichnet, dass** einer der Zapfen (104) der zweiten Flügel (100) länger als der andere (102) ist, wobei die längeren Zapfen (104) auf derselben Seite liegen.

15. Lüfter nach einem der Ansprüche 11 bis 14, **dadurch gekennzeichnet, dass** das Verbindungsstück (90) mit Halterillen (94) versehen ist, während die zweiten Flügel (100) mit einem seitlichen Vorsprung (106) versehen sind, der sich parallel und im Abstand von ihren Zapfen (102, 104) erstreckt, wobei die Vorsprünge (106) in den Halterillen (94) so eingebracht sind, dass die zweiten Flügel am ortsfesten Körper (10) schwenken können.

16. Lüfter nach Anspruch 15 und 13 oder 14, **dadurch gekennzeichnet, dass** der seitliche Vorsprung (106) der zweiten Flügel (100) im Anschluss an jener Längsseite letzterer liegt, die die Zapfen (102, 104) nicht aufweist.

17. Lüfter nach einem der vorangehenden Ansprüche, **dadurch gekennzeichnet, dass** er außerdem einen am beweglichen Körper (30) befestigten, vom Fahrzeuginnenraum aus zugänglichen Bedienungsring (110) aufweist, wobei der Ring einem Benutzer erlaubt, den beweglichen Körper am ortsfesten Körper (10) zu drehen, und die Regelflügel (70, 100) innerhalb dieses sichert.

18. Lüfter nach Anspruch 17, **dadurch gekennzeichnet, dass** der bewegliche Körper (30) und der Bedienungsring (110) sie lösbar verbindende Formschlusselemente aufweisen.

19. Lüfter nach Anspruch 18, **dadurch gekennzeichnet, dass** die Formschlusselemente durch am beweglichen Körper (30) oder am Bedienungsring (110) vorgesehene Umfangsvorsprünge (36) und durch im Bedienungsring oder im beweglichen Körper vorgesehene entsprechende Ausnehmungen gebildet sind.
